# EUROPEAN PATENT SPECIFICATION

(11) **EP 0 448 557 B1**
(45) Date of publication and mention of the grant of the patent: **29.12.1993**
(21) Application number: 89904159.4
(22) Date of filing: 13.03.1989
(51) Int. Cl.: B29C 31/00, B65H 5/00

(54) **IMPROVEMENTS IN AND RELATING TO HANDLING MEANS**
FÖRDERMITTEL
AMELIORATIONS APPORTEES AUX MOYENS DE MANUTENTION ET S'Y RAPORTTANT

(30) Priority: 12.03.1988 GB 8805922
(43) Date of publication of application: 02.10.1991
(73) Proprietor: BRIDGESTONE/FIRESTONE, INC., Akron, Ohio 44317 (US)
(72) Inventor: GOODFELLOW, Anthony, Gerald, Liverpool L31 7AA (GB)
(74) Representative: Dearing-Lambert, Peter Richard
(86) International application number: GB8900258
(87) International publication number: WO8908541

## Description

This invention relates to handling means, and in particular although not exclusively to handling means in the form of a carrier for accurate location and retention of flexible reinforced or unreinforced sheet material and transportation of that material between two work stations.

In the manufacture of elastomeric articles the quality of the finished products commonly is related to the care and accuracy with which constituent components of the article, and especially any layers of components for further processing such as deformation, moulding and vulcanisation operations.

An example of apparatus for the transportation of flexible sheet material is disclosed in US-A-4398999 and comprises a perforate type conveyor belt which slides over a vacuum box whereby ply stock material may be retained, by vacuum, on the conveyor belt for that part of the conveyor belt length which passes over the vacuum box.

In accordance with one of its aspects the present invention provides handling means for the transportation and positioning of flexible sheet material comprising a flexible carrier to support and move said flexible sheet material between two work stations and retention means operable to secure said sheet material to the carrier, wherein the retention means is movable with the carrier and is selectively operable to secure flexible sheet material to the carrier and accurately maintain a prescribed relative positioning of the sheet material and carrier during movement of the carrier, said carrier having associated therewith alignment means to facilitate accurate location of flexible sheet material in a prescribed position on the carrier at a first work station and accurate transfer and location of the sheet material relative to a second work station.

The handling means may comprise a first work station, a second work station for receiving flexible sheet material from the carrier and drive means operable to move the carrier between said first and second work stations.

The alignment means may comprise first alignment means to facilitate accurate location of flexible sheet material in a prescribed position on the carrier at the first work station, and second alignment means to facilitate accurate location of the sheet material relative to the second work station during transfer of the sheet material from the carrier at the second work station.

The carrier may be comprised by an array of slats, for example an array of a plurality of substantially rigid slats arranged in a side-by-side manner and interconnected by flexible connecting means whereby when arranged in a planar form the carrier is flexible about one axis contained by the plane of the carrier and substantially rigid about a second axis contained by said plane and extending substantially perpendicular relative to said one axis. The flexible connecting means may be a chain and preferably is a chain of the kind used in bicycle and similar transmissions, which is fully flexible in one plane but has only limited flexibility, if any, in a plane perpendicular to said one plane. Preferably the chain comprises a series of links interconnected by pins which freely interconnect respective pairs of links whereby the neighbouring slats may be moved to a small extent toward and away from one another. The carrier may comprise connecting means which confer a varying extensibility to different regions of the carrier. Thus if the carrier is flexible to a tubular form it may be arranged that when in the tubular form the carrier may be caused to adopt a barrel of like shape in contrast to a true cylindrical form.

The carrier alternatively may comprise a layer of flexible material such as flexible reticulated foam or a plurality of blocks arranged in a two dimensional array and interconnected by connecting means such as chain links in each of two mutually perpendicular directions of the array. The carrier may comprise an interlinked array of support block the interconnecting links of which are arranged to facilitate flexing of the carrier to either a substantially cylindrical or like tubular form in which two end portions of the carrier are brought into proximity one with the other. Alternatively, the carrier may comprise an interlinked array of support blocks the interconnecting links of which are arranged to facilitate flexing of the carrier in a helical manner to a scroll-like form.

The retention means may comprise a vacuum means. In the constructions in which the carrier is of a slatted construction one or more of the slats... may each be provided with a vacuum manifold arranged in communication with a plurality of suction zones in a surface of the slat intended in normal use to serve as a support for flexible sheet material. One or more slats additionally or alternatively may comprise a pressure manifold for supply of pressurised fluid to at least one opening in that surface of the slat for support of flexible sheet material whereby a supply of pressurised fluid to said pressure manifold will urge flexible sheet material away from the support surface of the slat.

At least one of the two end slats of the carrier may comprise said pressure manifold.

Additional, or as an alternative, to vacuum retention means, magnetic-type retention means may be provided especially where the flexible sheet material to be transported by the handling means comprises ferrous material.

For retention of an edge region of sheet material to be carried by the carrier said carrier may comprise or have associated therewith clamp means operable physically to clamp an edge of sheet material relative to the carrier at least until vacuum or other retention means comes into operation. The clamp means may be provided on a carriage on which the carrier is slideably mounted. Preferably the carriage is operable to move the carrier in unison therewith in a direction perpendicular to the direction in which the carrier may slide relative to the carriage.

When the carrier is of the slatted type at least one of the two end slats may be individually rotatable relative to slats lying intermediate said end slats thereby to facilitate interconnection of the end slats one with the other when the carrier is flexed to a generally tubular form.

The carrier may be provided at at least one edge region with edge support means for support of material applied around the carrier when in a deformed and substantially tubular condition. Said edge support means may comprise a support face which extends substantially perpendicular to the support surface of the carrier.

The handling means may comprise a first work station at which flexible sheet material may be formed, provided or stored in substantially tubular form prior to transfer to the carrier. The first work station may be in the form of a mandrel around which may be formed a tubular layer of elastomeric or like material having at least partially embedded therein at least one helically extending reinforcement element such as a cord or yarn of metallic or textile material. The first work station may comprise cutting means for cutting the tubular layer transversely, for example in a substantially longitudinal direction.

Guide means may be provided to guide the carrier between the first work station and a second work station whereby the direction relative to the carrier in which sheet material is transferred from the carrier to the second work station is substantially parallel with the length of a cut edge of sheet material when supported on the carrier.

The handling means may comprise a second work station at which flexible sheet material supported by the carrier may be caused to adopt a substantially tubular form, for example around an expansible former. In the case of a flexible carrier, connecting means may be provided to interlock ends of the flexible carrier at the second work station whereby the carrier may resist forces arising upon expansion of the former. The second work station alternatively may comprise a former of a non-expansible or non-contractible kind. The former, whether expansible or not, may comprise holding means such as a holding finger for retention of flexible sheet material.

Embodiments of the present invention will now be described, by way of example only, with reference to the accompanying diagrammatic drawings, in which:
Figure 1 shows partly in longitudinal section a part of a flexible carrier of a handling means in accordance with the present invention,
Figures 2 - 4 show part of the operation of the handling means to transfer sheet material to the flexible carrier at a first work station,
Figures 5 - 8 show stages in the transfer of sheet material from the first to a second work station,
Figures 9 - 11 show details of carrier holding means operable at the second work station,
Figures 12 - 14 show details of the assembly of tyre bead formations at the second working station,
Figure 15 is a plan view of part of a flexible carrier of another handling means in accordance with the present invention, and
Figures 16a and 16b respectively show side and plan views of a flexible carrier of handling means in accordance with a further aspect of the present invention.

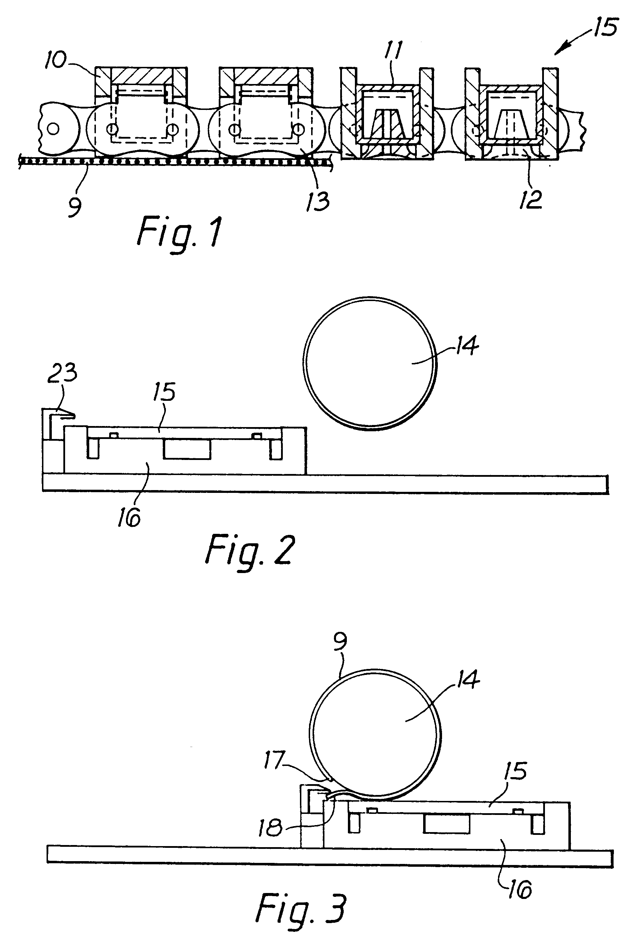

One embodiment of handling means as used for part of the operation of manufacturing a reinforced tubular structure suitable for subsequent use in the manufacture of a pneumatic tyre of the radial ply type is now described with reference to Figures 1 - 13 of the accompanying drawings.

A flexible carrier 15 for transportation of a ply of cord-reinforced flexible sheet material 9 between two work stations comprises a plurality of rigid hollow section slats 10 arranged in a parallel side-by-side relationship and interconnected by chains 13. The flexibility of the chains combined with the rigidity of the slats results in a flexible carrier which can be rolled upon itself about an axis perpendicular to the plane of Figure 1 but which is substantially rigid to resist deformation about an axis extending across Figure 1 in the plane thereof.

Each slat 10 houses a vacuum manifold which communicates with a plurality of vacuum suction cups 12 provided at a support surface of the carrier, being a lower surface of the carrier as shown in Figure 1 in which the carrier is in an inverted condition.

The left-hand portion of Figure 1 shows the carrier 15 in use to support a piece of flexible reinforced ply sheet material 9, the material being held securely to the carrier support surface by a vacuum acting through the cups 12.

The slatted carrier 15 is accurately located and supported by a carriage 16. One edge of the carriage is provided with ply clamp means 23 the function of which will be described below. The slats extend transversely relative to the length of the carrier.

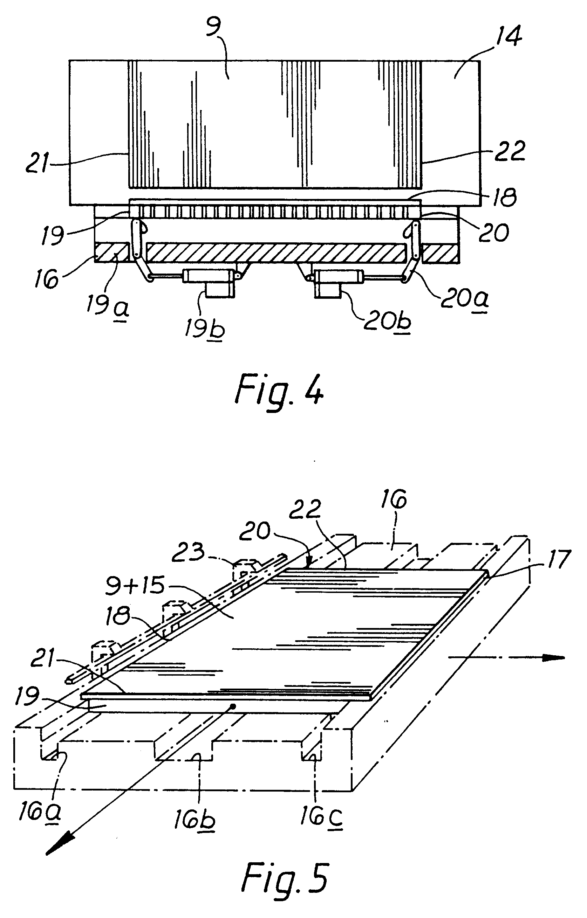

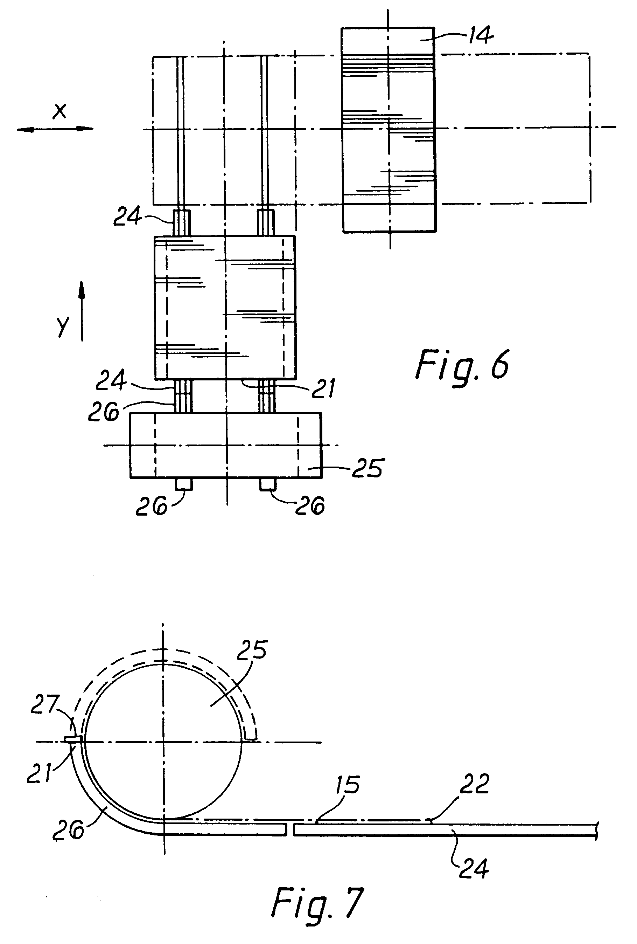

As supported by the carriage 16, the slatted carrier 15 is movable in two mutually perpendicular directions X, Y (see Figures 5 and 6) between a first work station comprising mandrel 14 and a second work station comprising former 25.

In the direction X the carriage and carrier are movable in unison to and from the mandrel 14 by drive means not shown. In the direction Y the carrier is movable over the carriage to and from the former 25 also by drive means not shown. For this purpose the carriage is provided with guidance grooves 16a, 16b, 16c in which carrier support wheels (not shown) are located and guided.

The mandrel 14 is of a kind around which there has been formed, for example by helical winding, a layer of flexible elastomeric material having at least one helically extending reinforcing cord either wholly or partially embedded therein. The tubular layer of ply fabric is cut substantially parallel with the axis of rotation of the mandrel to provide a pair of cut edges 17, 18.

To transfer the ply fabric from the mandrel to the carrier 15 the carrier 15 and carriage 16 are moved in unison toward the mandrel 14 in the direction of arrow X. The positioning of the carrier relative to the mandrel in the direction Y is carefully controlled by position sensing and control means, not shown but of conventional type, prior to movement in the direction X thereby to ensure that when the carrier 15 comes toward the mandrel the carrier lies substantially centrally relative to the width of the ply fabric carried by the mandrel.

A final alignment operation ensures that the edges 21, 22 of the ply fabric are aligned precisely with the end edges 19, 20 of the carrier. This alignment operation utilises control arms 19a, 19b to move the slats sideways within the tolerance provided by the pin clearances in the carrier chains 13. (The control arms 19a and 20a, and the associated drive means 19b, 20b are positioned to lie within the central carriage groove 16b.) The leading edge 21 is first aligned precisely relative to the end edge 19 of the carrier and the carrier end edge 20 is then finely adjusted for accurate alignment with the ply fabric edge 22.

Having precisely aligned the respective edges 19, 20, 21, 22 of the fabric and carrier the clamp 23 is operated to grip the cut edge 18 of the ply fabric 9 and hold that edge on the carrier. Transfer of the ply fabric 9 from the mandrel to the carrier is then completed by rotating the mandrel 14 slowly, in a clockwise direction as viewed in Figures 2 and 3, concurrent with linear movement of the carriage as the latter returns from underneath the mandrel to the relative positioning shown in Figure 2. If the ply fabric does not tend inherently to adhere to the mandrel 14, the mandrel may be provided with vacuum or like retention means to ensure proper support for the fabric as it is unwound onto the carrier. Vacuum is applied through the suction cups 12 to retain the ply fabric assembly positioned on the carrier.

When the transfer is complete the ply is held firmly and positioned accurately on the carrier 15 in the manner shown in Figure 5.

The carrier thus supports a sheet of ply fabric of a kind which as unwound from the mandrel comprises a reinforcement of a plurality of parallel cords.

From Figure 5 it will be seen that in this embodiment of the invention the cut edges 17, 18 of the ply fabric overhang the ends of the slats. This arises because the circumferential length of the ply fabric 9 on the mandrel 14 is arranged to be greater than the slat length and the purpose of this will be described below.

To continue the process of manufacture, the accurately positioned ply and carrier are transported along a carriage guide track 24 to a second work station where an already prepared building former 25 and carrier guide system 26, which aligns with the guide tracks 24, facilitates alignment and assembly of the ply onto the former 25 (see Figures 6 and 7). The former is of a cylindrical shape and the width of the ply fabric 9 when on the mandrel 14 is selected to correspond closely with the circumferential length of the former in this embodiment in which the material on the mandrel 14 is to be cut longitudinally. (If the material on the mandrel were to be cut transversely other than in the longitudinal direction, e.g. helically relative to the longitudinal axis of the mandrel, the length of that cut should correspond closely with the circumferential length of the former.)

The conveying direction Y to the former 25 results in the edge 21 of the ply fabric becoming the leading edge. The carrier moves into support by the guide system 26 to a prescribed position at which the now leading edge 21 is gripped and held by clamps 27 contained within the mechanism of guide system 26 (see Figure 7).

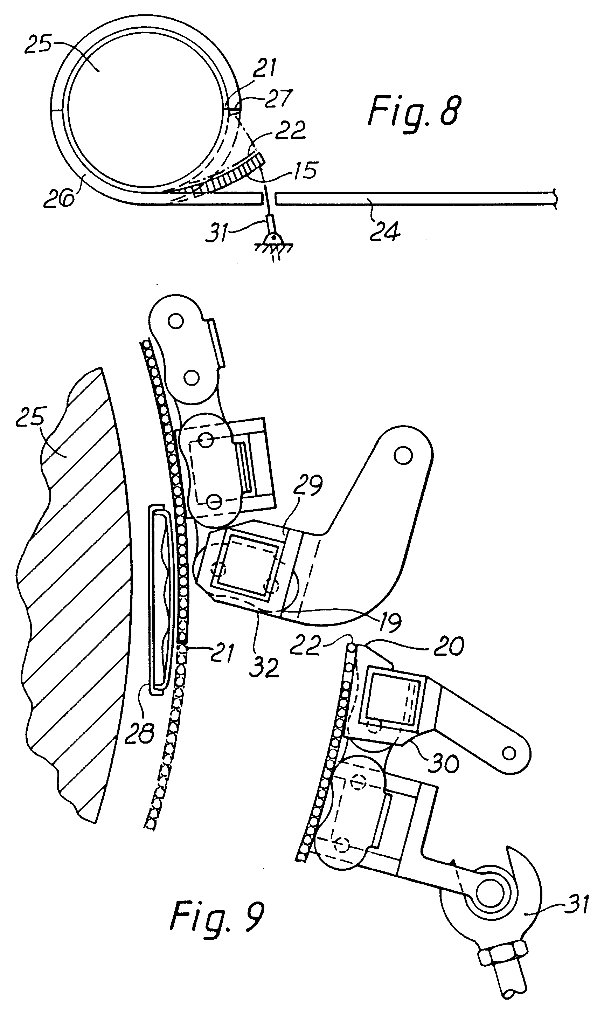

An upper portion of guide system 26 extends through a semi-circular path thereby to position edge 21 such that it can be manipulated to form an invisible joint when the trailing edge 22 of the ply fabric is brought upwards and round, supported on the carrier, to complete encirclement of the former as shown in Figure 8.

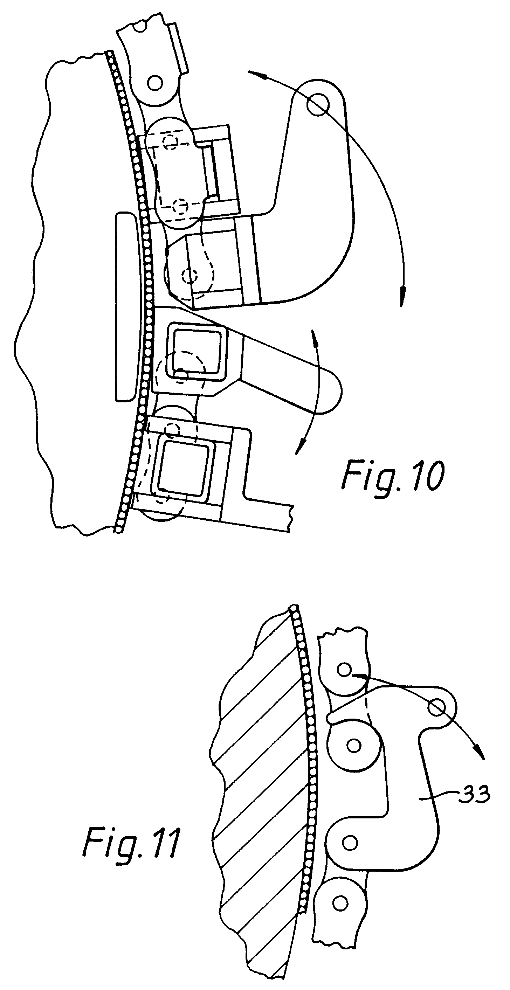

Joining of the ends 19, 20 of the carrier will now be described with reference to Figures 9 and 10. As the clamps 27 draw the leading edge 21 of the carrier to the position shown in Figure 8 a holding finger 28 extends axially between the former 25 and the guide system. The finger 28 is then moved radially outwards to contact and support the exposed face of the ply end 21 which is held and supported by the leading end 19 of carrier 15. The finger 28 may incorporate a vacuum facility for retention of ply fabric and or a pressure facility to cause ply fabric to lift from the finger. In Figure 9 the end 19 is shown as part of end slat 29 and end 20 as part of slat 30. The vacuum holding action of these slats can be separately controlled so that when finger 28 has hold of ply edge 21 the holding action of slat 29 can be released and slat 29 rotated in a direction so as to expose the ply edge 21.

In Figures 8 and 9 the guide track closing mechanism 31 is shown lifting end slat 30 in an involute path so as to cause end 20 to contact guiding face 32 of slat 29 which is exposed and positioned when slat 29 is rotated. The end 20 can then be guided, in one continuous motion, by face 32 to move the ply edge 22 into, for example, an overlapping contact with the exposed edge 21 and apply a joining force which is resisted by the finger 28. The joint is then completed with mechanism lying as shown in Figure 10.

Preferably end slat 30 is also rotated to expose the completed joint so that a consolidating roller (not shown) can traverse the joint to ensure that it is firmly held together over its entire length.

The joining process is completed by the slat 30 being returned to contact and hold the joint while latches 33 (see Figure 11) are operated to cause the carrier to become a continuous hoop. The finger 28 is then removed so that former 25 can expand radially and cause components which have been pre-applied to the former to contact the ply.

The carrier is then in a condition to provide the means of positioning reinforcing hoops such as tyre beads. If conventionally produced tyre beads and apexes are employed these may be fitted and held to the ends of the now continuous support tube formed by the carrier before the former is expanded against the inside of the support tube. By virtue of the aforedescribed feature of the cut edges 17, 18 of the ply fabric overhanging the ends of the slats the overhanging ends can be turned radially outwards around the beads, thereby to assist in locating the beads and resisting their subsequent axial separation.

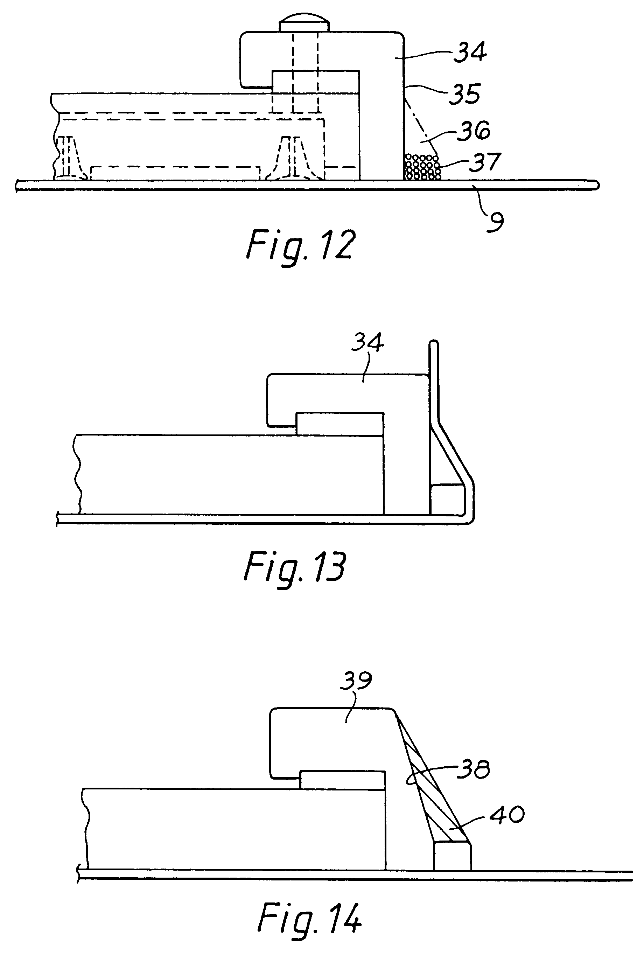

Figure 12 illustrates another method of providing and positioning the beads. Each bead 36 and apex 37 can be wound against a respective edge of the continuous support tube after the former has expanded. In this process the slats are fitted with special brackets 34 to create a supporting face 35 against which the bead 36 and apex 37, or bead and apex assembly, can be wound.

Figure 13 illustrates the benefit gained during the turning up operation by leaving the carrier with brackets 34 in situ so that the length of reinforcing cords of the ply which is locked around the beads is precisely defined and the brackets 34 provide an anvil against which the ply turn-up can be consolidated.

When the consolidation has been completed the use of the carrier is virtually complete if, in the case of tyre manufacture, the type of former in use is one which is capable of providing the means of inflating the tubular carcass structure into its final toroidal form. The carrier can then be removed to perform another cycle of operation. If however the former used does not have the means to inflate the carcass in the case of tyre manufacture the carrier can perform yet another function by holding the carcass in its now tubular form while the former is exchanged for one which can perform the inflation operation before the carrier is removed from the outer surface of the carcass.

Figure 14 illustrates a yet further method for providing and positioning the beads. The bracket 39 has an inclined surface 38 whereby a circumferentially extending series of the brackets define a frusto-conical surface against which an inwardly inclined bead apex region 40 may be formed. The flexibility of the apex in the finished assembly allows removal of the carrier.

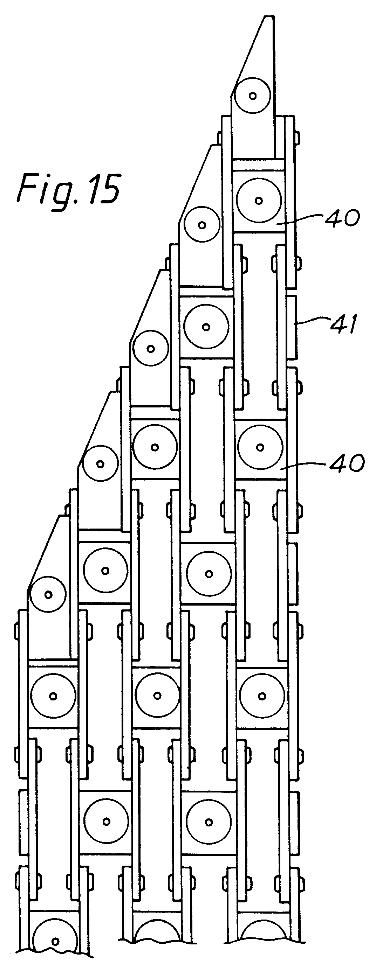

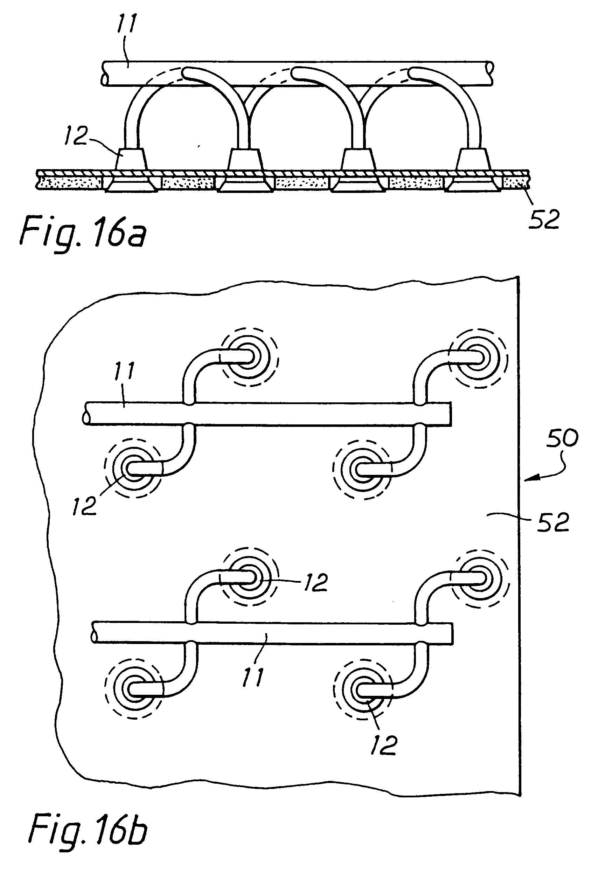

Figure 15 illustrates another form of the carrier described as a chain mat and comprising a staggered array of blocks 40 interconnected by chain links 41. This form of carrier is most useful for handling reinforced components which have a parallelogram shape such as used in cross-ply tyres or suspension units or breaker plies of radial tyres. The carrier can be used substantially in the same manner as described for the aforedescribed slatted version. It can also be contorted in an angular plane so that the vacuum pick-off and application processes can be achieved in a circular path different from the angle of any reinforcing cords contained in the supported sheet material. Figure 16 illustrates yet another form of the carrier 50 which has instead of or in addition to its proprietory vacuum cups 51 a vacuum support system which covers an area extending to the shape of the sheet material component to be carried by the carrier. This form of carrier can use, for example, reticulated flexible foamed plastics material 52 in contrast to the aforedescribed slats or blocks and can be used to provide support for sheet material over the whole of its surface. It is therefore well suited for use with elastomeric components which do not contain reinforcement.

Although the aforesdescribed operation of manufacturing a reinforced tubular structure is suitable for the construction of a tubular structure deformable to the toroidal shape of a pneumatic tyre and especially one of the radial ply type it is to be understood that the tubular structure may be used as, or for the subsequent formation of, other articles such as a suspension diaphragm. Furthermore it is not limited to the accurate transfer and location of sheet material of the reinforced type; it is likewise applicable to the handling of sheets of unreinforced material.

## Claims

1. Handling means for the transportation and positioning of flexible sheet material comprising a flexible carrier (15) to support and move said flexible sheet material (9) between two work stations (14,25) and retention means operable to secure sheet material (9) to the carrier characterised in that said retention means (12) is movable with the carrier and is selectively operable to secure flexible sheet material (9) to the carrier (15) and accurately maintain a prescribed relative positioning of the sheet material (9) and carrier (15) during movement of the carrier (15), said carrier having associated therewith alignment means (19,26) to facilitate accurate location of flexible sheet material (9) in a prescribed position on the carrier (15) at a first work station (14) and accurate transfer and location of the sheet material (9) relative to the second work station (25).

2. Handling means as claimed in claim 1, characterised in that said alignment means comprises first alignment means (19) to facilitate accurate location of flexible sheet material (9) in a prescribed position on the carrier (15) a the first work station (14), and second alignment means (26) to facilitate accurate location of the sheet material (9) relative to the second work station (25) during transfer of the sheet material (9) from the carrier (15) at the second work station (25).

3. Handling means as claimed in claim 1 or claim 2 characterised in that it comprises a first work station (14), a second work station (25) for receiving flexible sheet material (9) from the carrier (15) and drive means operable to move the carrier (15) between said first (14) and second (25) work stations.

4. Handling means as claimed in any one of the preceding claims characterised in that carrier guide means (16) is provided to guide the carrier (15) between first (14) and second (25) work stations whereby the direction relative to the carrier (15) in which sheet material (9) is receivable by the carrier (15) from the first work station (14) is substantially perpendicular to the direction relative to the carrier (15) in which sheet material (9) is transferred from the carrier (15) to the second work station (25).

5. Handling means as claimed in any one of the preceding claims, characterised in that the carrier (15) is flexible about one axis X contained by the plane of the carrier but is substantially rigid about a second axis Y contained by said plane and extending in a direction substantially perpendicular relative to said one axis X.

6. Handling means as claimed in claim 5, characterised in that the carrier (15) comprises a plurality of substantially rigid slats (10) arranged in a side-by-side manner and interconnected by flexible connecting means (13) whereby the carrier (15), when arranged in a planar form, is flexible about said one axis X and substantially rigid about said second axis Y.

7. Handling means as claimed in claim 6, characterised in that said flexible connecting means (13) is comprised by at least one chain.

8. Handling means as claimed in any one of the preceding claims, characterised in that said retention means is a vacuum retention means (12).

9. Handling means as claimed in claim 8, when dependant on claim 6 or claim 7, characterised in that at least one of said plurality of slats (10) is provided with a vacuum manifold (12) which communicates with a plurality of suction zones in that surface of the slat (10) for support of flexible sheet material (9).

10. Handling means as claimed in claim 6, claim 7 or claim 8, characterised in that at least one of the slats (29,30) comprises a pressure manifold (28) for supply of pressurised fluid to at least one opening in that surface of the slat (29,30) for support of flexible sheet material (9) whereby a supply of pressurised fluid to said pressure manifold (28) will urge flexible sheet material (9) away from the support surface of the slat (29,30).

11. Handling means as claimed in claim 10, characterised in that at least one of the two end slats (29,30) of the carrier (15) comprises said pressure manifold.

12. Handling means as claimed in any one of the claims 6,7 and 9-11, characterised in that at least one of the two end slats (29,30) is individually rotatable relative to slats (10) lying intermediate said end slats (29,30) thereby to facilitate interconnection of the said end slats (29,30) one with the other when the carrier (15) is flexed to a generally tubular form.

13. Handling means as claimed in any one of claims 6,7 or 9-12, characterised in that neighbouring slats (10) may be moved towards or away from one another.

14. Handling means as claimed in any one of claims 1 - 5, characterised in that the carrier (15) comprises an interlinked array of support blocks (40) the interconnecting links (41) of which are arranged to facilitate flexing of the carrier (15) to either a substantially cylindrical or like tubular form in which two end portions of the carrier are brought into proximity one with the other.

15. Handling means as claimed in any one of claims 1 - 5, characterised in that the carrier (15) comprises an interlinked array of support blocks (40) the interconnecting links (41) of which are arranged to facilitate flexing of the carrier (15) in a helical manner to a scroll-like form.

16. Handling means as claimed in claim 14 or claim 15, characterised in that the carrier (15) possesses the shape of a parallelogram.

17. Handling means as claimed in any one of claims 1 - 5, characterised in that the carrier (15) comprises a sheet (52) of pliable material for support of said flexible sheet material (9).

18. Handling means as claimed in any one of claims 1 - 7 and 14 - 17, characterised in that the retention means (12) is a vacuum retention means.

19. Handling means as claimed in any one of claims 1 -7 and 14 - 17, characterised in that the retention means is a magnetic retention means.

20. Handling means as claimed in any one of the preceding claims, characterised in that the carrier (15) is provided at at least one edge region with edge support means for support of material applied around the carrier (15) when in a deformed and substantially tubular condition.

21. Handling means as claimed in claim 20, characterised in that said edge support means comprises a support face which extends substantially perpendicular to the support surface of the carrier (15).

22. Handling means as claimed in any one of the preceding claims, characterised in that the carrier (15) comprises connecting means (13) which confer a varying extensibility to different regions of the carrier.

23. Handling means as claimed in any one of the preceding claims, characterised in that said first work station (14) is a building station having means for constructing a tubular component (9) of flexible material and for cutting the component transversely to provide said component with a pair of cut edges (17,18).

24. Handling means as claimed in claim 23, characterised in that guide means is provided to guide the carrier (15) between the building station (14) and a second work station (25) whereby the direction relative to the carrier (15) in which sheet material is transferred from the carrier to the second work station (25) is substantially parallel with the length of a cut edge (17) of sheet material when supported by the carrier.

25. Handling means as claimed in any one of the preceding claims, characterised in that said second work station (25) is a building station at which flexible sheet material (9) from a carrier (15) may be guided around an expansible building former.

## Patentansprüche

1. Förderer oder Handhabungsmittel für den Transport und die Positionierung flexiblen Lagenmaterials, umfassend
einen flexiblen Träger (15) zum Stützen und Bewegen des flexiblen Lagenmaterials (9) zwischen zwei Arbeitsstationen (14,25) und Festhaltemittel, die betätigbar sind, um das Lagenmaterial (9) am Träger festzuhalten, dadurch gekennzeichnet, daß das Festhaltemittel (12) mit dem Träger bewegbar und wahlweise betätigbar ist, um das flexible Lagenmaterial (9) am Träger (15) festzuhalten und genau eine vorbestimmte relative Positionierung von Lagenmaterial (9) und Träger (15) während der Bewegung des Trägers (15) aufrechtzuerhalten, und wobei der Träger zugehörige Ausrichtungsmittel (19,26) besitzt, um die genaue Anordnung des flexiblen Lagenmaterials (9) in einer vorbestimmten Position auf dem Träger (15) an einer ersten Arbeitsstation (14) und die genaue Überführung zur und Anordnung des Lagenmaterials (9) entsprechend an der zweiten Arbeitsstation (25) zu erleichtern.

2. Förderer oder Handhabungsmittel nach Anspruch 1, dadurch gekennzeichnet, daß das Ausrichtungsmittel ein erstes Ausrichtungsmittel (19) umfasst, um die genaue Anordnung des flexiblen Lagenmaterials (9) in einer vorbestimmten Position auf dem Träger (15) an der ersten Arbeitsstation (14) zu erleichtern, und das zweite Ausrichtungsmittel (26) vorgesehen sind, um die genaue Anordnung des Lagenmaterials (9) relativ zur zweiten Arbeitsstation (25) während der Übergabe des Lagenmaterials (9) vom Träger (15) an der zweiten Arbeitsstation (25) zu erleichtern.

3. Förderer oder Handhabungsmittel nach Anspruch 1 oder 2, dadurch gekennzeichnet, daß es eine erste Arbeitsstation (14), eine zweite Arbeitsstation (25) zur Aufnahme des flexiblen Lagenmaterials (9) vom Träger (15) und Antriebsmittel umfasst, die den Träger (15) zwischen der ersten (14) und der zweiten (25) Arbeitsstation im Betrieb bewegen.

4. Förderer oder Handhabungsmittel nach irgendeinem der vorstehenden Ansprüche, dadurch gekennzeichnet, daß ein Trägerführungsmittel (16) vorgesehen ist, um den Träger (15) zwischen der ersten (14) und der zweiten (25) Arbeitsstation zu führen, wodurch die Richtung relativ zum Träger (15), in welcher das Lagenmaterial (9) vom Träger (15) von der ersten Arbeitsstation (14) aufgenommen wird, im wesentlichen senkrecht zur Richtung relativ zum Träger (15) ist, in der das Lagenmaterial (9) vom Träger (15) zur zweiten Arbeitsstation (25) überführt wird.

5. Förderer oder Handhabungsmittel nach irgendeinem der vorstehenden Ansprüche, dadurch gekennzeichnet, daß der Träger (15) um eine Achse (X) herum flexibel ist, die in der Ebene des Trägers liegt, jedoch im wesentlichen starr um eine zweite Achse (Y) herum, die in dieser Ebene liegt und sich in einer Richtung erstreckt, die im wesentlichen senkrecht zu der genannten Achse (X) ist.

6. Förderer oder Handhabungsmittel nach Anspruch 5, dadurch gekennzeichnet, daß der Träger (15) eine Vielzahl im wesentlichen fester Lattenverkleidungen (10), die in nebeneinanderliegender Weise angeordnet und durch flexible Verbindungsmittel (13) verbunden sind, wodurch der Träger (15), wenn er in einer ebenen Form angeordnet ist, und die eine Achse (X) flexibel und im wesentlichen starr bzw. steif um die zweite Achse (Y) herum ist.

7. Förderer oder Handhabungsmittel nach Anspruch 6, dadurch gekennzeichnet, daß das flexible Verbindungsmittel (13) mindestens eine Kette umfasst.

8. Förderer oder Handhabungsmittel nach einem der vorstehenden Ansprüche, dadurch gekennzeichnet, daß das Festhaltemittel ein Vakuumfesthaltemittel (12) ist.

9. Förderer oder Handhabungsmittel nach Anspruch 8, in Abhängigkeit von Anspruch 6 oder 7, dadurch gekennzeichnet, daß mindestens eine der vielen Lattenverkleidungen (10) mit einer Rohrverzweigung (12) versehen ist, die mit einer Vielzahl von Saugbereichen in der Fläche der Lattenverkleidung (10) kommuniziert, um das flexible Lagenmaterial (9) zu tragen.

10. Förderer oder Handhabungsmittel nach Anspruch 6, 7 oder 8, dadurch gekennzeichnet, daß mindestens eine der Lattenverkleidungen (29,30) eine Druckrohrverzweigung bzw. einen verzweigten Druckrohranschluss (28) umfasst, um unter Druck stehendes Strömungsmittel zumindestens einer Öffnung in der Fläche der Lattenverkleidung (29,30) zu liefern, um das flexible Lagenmaterial (9) zu tragen, wodurch eine Beschickung des unter Druck stehenden Strömungsmittels zu dieser Druckrohrverzweigung (28) das flexible Lagenmaterial (9) weg von der Tragfläche der Lattenverkleidung (29,30) drückt.

11. Förderer oder Handhabungsmittel nach Anspruch 10, dadurch gekennzeichnet, daß mindestens eine der beiden Endlattenverkleidungen (29,30) des Trägers (15) einen verzweigten Druckrohranschluss bzw. Rohrverzweigung umfasst.

12. Förderer oder Handhabungsmittel nach irgendeinem der Ansprüche 6, 7 und 9 bis 11, dadurch gekennzeichnet, daß mindestens eine der beiden Endlattenverkleidungen (29,30) einzeln relativ zu den Lattenverkleidungen (10) drehbar ist, die zwischen den Endlattenverkleidungen (29,30) liegen, wodurch die Verbindung der beiden Endlattenverkleidungen (29,30) miteinander erleichtert wird, wenn der Träger (15) zu einer generellen Rohrform abgebogen wird.

13. Förderer oder Handhabungsmittel nach irgendeinem der vorstehenden Ansprüche 6, 7 oder 9 bis 12, dadurch gekennzeichnet, daß benachbarte Lattenverkleidungen (10) aufeinander zu oder voneinander weg bewegt werden können.

14. Förderer oder Handhabungsmittel nach irgendeinem der Ansprüche 1 bis 5, dadurch gekennzeichnet, daß der Träger (15) eine Anordnung miteinander verbundener Stützblöcke (40) umfasst, deren Verbindungsglieder (41) so angeordnet sind, daß sie das Biegen des Trägers (15) entweder zu einer im wesentlichen zylindrischen oder ähnlichen rohrförmigen Form erleichtern, in der die beiden Endabschnitte des Trägers dicht zusammengebracht werden.

15. Förderer oder Handhabungsmittel nach irgendeinem der Ansprüche 1 bis 5, dadurch gekennzeichnet, daß der Träger (15) eine Anordnung miteinander verbundener Stützblöcke (40) umfasst, deren Verbindungsglieder (41) so angeordnet sind, daß sie das Biegen des Trägers (15) in schraubenförmiger Weise unter Ausbildung einer rollenähnlichen Form erleichtern.

16. Förderer oder Handhabungsmittel nach Anspruch 14 oder 15, dadurch gekennzeichnet, daß der Träger (15) die Form eines Parallelogramms besitzt.

17. Förderer oder Handhabungsmittel nach irgendeinem der Ansprüche 1 bis 5, dadurch gekennzeichnet, daß der Träger (15) eine Lage (52) eines biegsamen Materials zum Tragen des flexiblen Lagenmaterials (9) umfasst.

18. Förderer oder Handhabungsmittel nach irgendeinem der Ansprüche 1 bis 7 und 14 bis 17, dadurch gekennzeichnet, daß das Festhaltemittel (12) ein Vakuumfesthaltemittel ist.

19. Förderer oder Handhabungsmittel nach irgendeinem der Ansprüche 1 bis 7 und 14 bis 17, dadurch gekennzeichnet, daß das Festhaltemittel ein magnetisches Festhaltemittel ist.

20. Förderer oder Handhabungsmittel nach irgendeinem der vorstehenden Ansprüche, dadurch gekennzeichnet, daß der Träger (15) in mindestens einem Kantenbereich mit einem Kantenstützmittel versehen ist, um das um den Träger (15) herum aufgetragene Material zu stützen, wenn es sich in einem deformierten und im wesentlichen schlauch- oder rohrförmigen Zustand befindet.

21. Förderer oder Handhabungsmittel nach Anspruch 20, dadurch gekennzeichnet, daß das Kantenstützmittel eine Stützfläche umfasst, die sich im wesentlichen senkrecht zur Stützfläche des Trägers (15) erstreckt.

22. Förderer oder Handhabungsmittel nach irgendeinem der vorstehenden Ansprüche, dadurch gekennzeichnet, daß der Träger (15) ein Verbindungsmittel (13) umfasst, daß eine sich verändernde Dehnbarkeit auf unterschiedliche Bereiche des Trägers überträgt.

23. Förderer oder Handhabungsmittel nach irgendeinem der vorstehenden Ansprüche, dadurch gekennzeichnet, daß die erste Arbeitsstation (14) eine Aufbaustation ist, die Mittel zum Aufbauen eines schlauchförmigen Bestandteils (9) flexiblen Materials und zum Querschneiden der Komponente besitzt, um die Komponente mit einem geschnittenen Kantenpaar (17,18) zu versehen.

24. Förderer oder Handhabungsmittel nach Anspruch 23, dadurch gekennzeichnet, daß das Führungsmittel ausgelegt ist, um den Träger (15) zwischen der Aufbaustation (14) und einer zweiten Arbeitsstation (25) zu führen, wodurch die Richtung relativ zum Träger (15), in der das Lagenmaterial vom Träger zu einer zweiten Arbeitsstation (25) überführt wird, im wesentlichen parallel zur Länge einer abgeschnittenen Kante (17) des Lagenmaterials ist, wenn es durch den Träger getragen wird.

25. Förderer oder Handhabungsmittel nach irgendeinem der vorstehenden Ansprüche, dadurch gekennzeichnet, daß die zweite Arbeitsstation (25) eine Aufbaustation ist, an der das flexible Lagenmaterial (9) von einem Träger (15) um eine sich ausdehnende Aufbauformvorrichtung herumgeführt werden kann.

## Revendications

1. Manipulateur de transport et de positionnement de matière souple en feuille, comprenant un transporteur souple (15) de support et de déplacement de ladite matière souple en feuille (9) entre deux postes de travail (14, 25) et des moyens de retenue destinés à immobiliser la matière en feuille (9) sur le transporteur, caractérisé en ce que ledit moyen de retenue (12) est mobile avec le transporteur et peut être actionné sélectivement pour immobiliser la matière souple en feuille (9) sur le transporteur (15) et maintenir avec précision un positionnement relatif prescrit de la matière en feuille (9) et du transporteur (15) pendant le mouvement du transporteur (15), des moyens d'alignement (19, 26) étant associés audit transporteur pour faciliter le positionnement précis de la matière souple en feuille (9) à un emplacement prescrit sur le transporteur (15) à un premier poste de travail (14) et transférer avec précision et positionner la matière en feuille (9) par rapport au second poste de travail (25).

2. Manipulateur selon la revendication 1, caractérisé en ce que lesdits moyens d'alignement comprennent un premier moyen d'alignement (19) pour faciliter le positionnement précis de la matière souple en feuille (9) en un emplacement prescrit sur le transporteur (15) à un premier poste de travail (14) et un second moyen d'alignement (26) destiné à faciliter le positionnement précis de la matière en feuille (9) par rapport au second poste de travail (25) pendant le transfert de la matière en feuille (9) du transporteur (15) au second poste de travail (25).

3. Manipulateur selon la revendication 1 ou 2, caractérisé en ce qu'il comprend un premier poste de travail (14), un second poste de travail (25) destiné à réceptionner la matière souple en feuille (9) du transporteur (15) et une commande destinée à déplacer le transporteur (15) entre lesdits premier (14) et second (25) postes de travail.

4. Manipulateur selon l'une quelconque des revendications précédentes, caractérisé en ce qu'un moyen de guidage (16) du transporteur est prévu pour guider le transporteur (15) entre les premier (14) et second (25) postes de travail de manière que la direction relative par rapport au transporteur (15) suivant laquelle la matière en feuille (9) peut être réceptionnée du premier poste de travail (14) par le transporteur (15) soit sensiblement perpendiculaire à la direction par rapport au transporteur (15) dans laquelle la matière en feuille (9) est transférée du transporteur (15) au second poste de travail (25).

5. Manipulateur selon l'une quelconque des revendications précédentes, caractérisé en ce que le transporteur (15) est souple autour d'un premier axe X situé dans le plan du transporteur, mais est sensiblement rigide autour d'un second axe Y situé dans ledit plan et orienté dans une direction sensiblement perpendiculaire audit un axe X.

6. Manipulateur selon la revendication 5, caractérisé en ce que le transporteur (15) comprend de multiples lamelles (10) sensiblement rigides disposées côte à côte et reliées par un moyen souple de liaison (13) de façon que le transporteur (15) mis à une forme plane soit souple autour dudit premier axe X et sensiblement rigide autour dudit second axe Y.

7. Manipulateur selon la revendication 6, caractérisé en ce que ledit moyen souple de liaison (13) consiste en au moins une chaîne.

8. Manipulateur selon l'une quelconque des revendications précédentes, caractérisé en ce que ledit moyen de retenue est un moyen de retenue à dépression (12).

9. Manipulateur selon la revendication 8 dépendante de la revendication 6 ou de la revendication 7, caractérisé en ce qu'au moins l'une desdites lamelles multiples (10) est équipée d'une tubulure à dépression (12) qui communique avec de multiples zones d'aspiration situées dans la surface de la lamelle (10) qui est destinée à supporter la matière souple en feuille (9).

10. Manipulateur selon la revendication 6, 7 ou 8, caractérisé en ce qu'au moins l'une des lamelles (29, 30) comprend une tubulure à pression (28) destinée à envoyer un fluide comprimé à au moins un trou de la surface de la lamelle (29, 30) destinée à supporter la matière souple en feuille (9), de manière qu'un envoi de fluide comprimé dans ladite tubulure à pression (28) écarte la matière souple en feuille (9) de la surface de support de la lamelle (29, 30).

11. Manipulateur selon la revendication 10, caractérisé en ce qu'au moins l'une des deux lamelles d'extrémité (29, 30) du transporteur (15) comprend ladite tubulure à pression.

12. Manipulateur selon l'une des revendications 6, 7 et 9 - 11, caractérisé en ce qu'au moins l'une des deux lamelles d'extrémité (29, 30) est rotative individuellement par rapport aux lamelles (10) situées entre lesdites lamelles d'extrémité (29, 30), de manière à faciliter le raccordement desdites lamelles d'extrémité (29, 30) l'une avec l'autre lorsque le transporteur (15) subit une flexion pour être mis à une forme sensiblement tubulaire.

13. Manipulateur selon l'une quelconque des revendications 6, 7 ou 9 - 12, caractérisé en ce que les lamelles voisines (10) peuvent être écartées ou rapprochées les unes des autres.

14. Manipulateur selon l'une quelconque des revendications 1 - 5, caractérisé en ce que le transporteur (15) comprend un ensemble de blocs de support (40) reliés par articulations et dont les articulations (41) qui les réunissent sont disposées de manière à faciliter le fléchissement du transporteur (15) le mettant à une forme soit sensiblement cylindrique, soit tubulaire analogue dans laquelle deux parties extrêmes du transporteur sont placées à proximité l'une de l'autre.

15. Manipulateur selon l'une quelconque des revendication 1 à 5, caractérisé en ce que le transporteur (15) comprend un ensemble de blocs de support (40) articulés les uns sur les autres et dont les articulations (41) qui les relient sont disposées de manière à faciliter le fléchissement du transporteur (15) en hélice de manière qu'il soit mis à une forme analogue à une spirale.

16. Manipulateur selon la revendication 14 ou 15, caractérisé en ce que le transporteur (15) a la forme d'un parallélogramme.

17. Manipulateur selon l'une quelconque des revendications 1 à 5, caractérisé en ce que le transporteur (15) comprend une feuille (52) de matière flexible de support de ladite matière souple en feuille (9).

18. Manipulateur selon l'une quelconque des revendications 1 - 7 et 14 - 17, caractérisé en ce que le moyen de retenue (12) est un moyen de retenue à dépression.

19. Manipulateur selon l'une quelconque des revendications 1 - 7 et 14 - 17, caractérisé en ce que le moyen de retenue est un moyen de retenue magnétique.

20. Manipulateur selon l'une quelconque des revendication précédentes, caractérisé en ce que le transporteur (15) est équipé dans au moins une région de bord d'un moyen de support de bord destiné à supporter une matière placée autour du transporteur (15) lorsqu'elle est en condition déformée et sensiblement tubulaire.

21. Manipulateur selon la revendication 20, caractérisé en ce que ledit moyen de support de bord comprend une surface de support qui est sensiblement perpendiculaire à la surface de support du transporteur (15).

22. Manipulateur selon l'une quelconque des revendications précédentes, caractérisé en ce que le transporteur (15) comprend des moyens de liaison (13) qui confèrent une extensibilité variable à différentes régions du transporteur.

23. Manipulateur selon l'une quelconque des revendications précédentes, caractérisé en ce que ledit premier poste de travail (14) est un poste de construction comprenant des moyens pour construire un composant tubulaire (9) de matière souple et pour couper le composant transversalement pour donner audit composant deux bords coupés (17, 18).

24. Manipulateur selon la revendication 23, caractérisé en ce que lesdits moyens de guidage sont prévus pour guider le transporteur (15) entre le poste de construction (14) et un second poste de travail (15) de manière que la direction par rapport au transporteur (15) suivant laquelle la matière en feuille est transférée du transporteur au second poste de travail (25) soit sensiblement parallèle à la longueur d'un bord coupé (17) de la matière en feuille au moment où elle est supportée par le transporteur.

25. Manipulateur selon l'une quelconque des revendications précédentes, caractérisé en ce que ledit second poste de travail (25) est un poste de construction auquel la matière souple en feuille (9) provenant d'un transporteur (15) peut être guidée autour d'un gabarit expansible de construction.
